# EUROPÄISCHE PATENTSCHRIFT

(11) **EP 3 032 006 B1**
(45) Veröffentlichungstag und Bekanntmachung des Hinweises auf die Patenterteilung: **22.11.2017**
(21) Anmeldenummer: 14197032.7
(22) Anmeldetag: 09.12.2014
(51) Int. Cl.: E05B 65/10

(54) **Fluchttürsteuerung**
Escape door control
Appareil de commande de porte de secours

(43) Veröffentlichungstag der Anmeldung: 15.06.2016
(73) Patentinhaber: BKS GmbH, 42549 Velbert (DE)
(72) Erfinder: Schulze, Heinz-Christian, 44869 Bochum (DE)
(74) Vertreter: DREISS Patentanwälte PartG mbB

(56) Entgegenhaltungen:
- EP-A1- 2 518 747
- EP-A2- 2 169 154
- US-A1- 2006 059 963

## Beschreibung

Die vorliegende Erfindung betrifft eine Fluchttürsteuerung mit einer Steuereinrichtung, wobei die Steuereinrichtung eine Leseeinrichtung zum drahtlosen Auslesen von Identifikationsträgern aufweist, und mit einem beleuchteten Kennzeichnungsschild.

Fluchttürsteuerungen der eingangs genannten Art sind aus dem Stand der Technik bekannt. So dienen Fluchttürsteuerungen in öffentlichen Gebäuden oder Firmengebäuden dazu, verschlossene Türen in einem Notfall, beispielsweise bei einem Brand, einer Rauchentwicklung oder einer Massenpanik, sofort freizugeben.

Bekannte Fluchttürsteuerungen umfassen mindestens drei Komponenten, nämlich eine betätigbare Freigabeeinrichtung zur Türöffnung im Notfall, ein Kennzeichnungsschild zur Kennzeichnung des Notausgangs bzw. der Flüchttür und einen Schlüsselschalter zur Öffnung der Fluchttür durch befugte Personen.

Eine dementsprechende Fluchttürsteuerung ist beispielsweise aus der DE 10 2012 012 058 A1 bekannt. Mit dieser Fluchttürsteuerung ist im Notfall eine Notöffnung mittels Drucktaster möglich. Im Normalbetrieb lässt sich die Tür mittels Schlüsselschalter oder mittels eines Ausweislesers öffnen. Allerdings ist bei einer solchen Fluchttürsteuerung von Nachteil, dass diese einen großen Platzbedarf und einen hohen Installationsaufwand aufweist. Zudem ist die Gefahr von Manipulationen durch Unbefugte gegeben, insbesondere durch Manipulation des wandseitigen Schlüsselschalters.

EP 2 518 747 A1 zeigt ein Nottasterterminal, in dem ein Bildschirm und ein dahinter angeordneter Notschaltknopf in einem Gehäuse integriert sind. US 2006/0059963 A1 zeigt ein kabelloses Zutrittssystem mit einer kabellosen, an einem Türflügel montierten Einheit mit einer Druckstange. EP 2 169 154 A2 zeigt eine Türzentrale mit einem integrierten Notauftaster und einer integrierten Leseeinheit.

Der vorliegenden Erfindung liegt daher die Aufgabe zugrunde, bei geringem konstruktivem Aufwand einen zuverlässigen und komfortablen Betrieb einer Fluchttürsteuerung zu ermöglichen.

Die vorliegende Erfindung löst die voranstehende Aufgabe durch eine Fluchttürsteuerung mit den Merkmalen des Anspruchs 1. Danach ist die Fluchttürsteuerung derart ausgestaltet und weitergebildet, dass die Leseeinrichtung und das Kennzeichnungsschild zu einer Einheit zusammengefasst sind.

Erfindungsgemäß kann der konstruktive Aufwand dadurch gering gehalten werden, dass die Leseeinrichtung und das beleuchtete Kennzeichnungsschild nicht als separate Elemente ausgebildet, sondern zu einer gemeinsamen baulichen Einheit zusammengefasst sind. Durch die Integration dieser beiden Komponenten zu einer Einheit lässt sich eine kompakte Bauweise mit geringem Platzbedarf realisieren, so dass auch der Installationsaufwand beim Einbau der Fluchttürsteuerung, beispielsweise in Verkleidungselemente in oder an der Wand, bspw. ein Aufputzgehäuse oder ein Türprofil, oder eine Unterputzinstallation, bspw. einer Unterputzdose, reduziert ist. Dabei kann die Einheit derart kompakt ausgeführt sein, dass das beleuchtete Kennzeichnungsschild in Schaltergröße, bspw. in der Größe eines Lichtschalters, ausgebildet ist. Derart kompakte Kennzeichnungsschilder sind auf Grund geänderter Vorschriften (DIN EN 13637) als ausreichende Kennzeichnungsmöglichkeit für Fluchttüren zugelassen.

Zudem lassen sich erfindungsgemäß auch die Sicherheit und die Manipulationssicherheit optimieren, da die mit dem Kennzeichnungsschild integrierte Leseeinrichtung den bei Fluchttüreinrichtungen verwendeten Schlüsselschalter ersetzen kann und diesen somit überflüssig macht. Somit kann die Fluchttürsteuerung kompakter ausgebildet werden und die Gefahr einer steuerungsseitigen Manipulation ist somit ausgeräumt, in jedem Fall ganz erheblich reduziert.

Die Leseeinrichtung ist mit verschiedenen Identifikationsträgern, beispielsweise mit einer Karte in Ausweisform, einem Transponder oder einem Smartphone, ansteuerbar. Durch diese Ansteuerungsmöglichkeit lässt sich auch eine einfachere Programmierung oder Parametrierung der Steuereinrichtung realisieren, beispielsweise durch einen mobilen PC, ein Telefon oder ein Smartphone.

Das beleuchtete Kennzeichnungsschild kann als Notausgang-Piktogramm ausgebildet sein, mit dem Notausgänge kenntlich gemacht werden.

Die Einheit ist als passendes Einsatzelement für Schalterprogramme, Aufputzgehäuse, Türprofile und/oder für eine Unterputzdose ausgebildet. Mit anderen Worten ist die Einheit derart ausgeführt, dass sie sich wie ein Schaltereinsatz in eine Unterputzdose oder ein Schaltergehäuse einsetzen lässt. Auch ein Einbau in oder auf einer Wand ist denkbar, bspw. in einem Aufputzgehäuse oder in oder auf einem Türprofil. So kann bei Einbau in einem Türprofil eine Aussparung im Rahmen einer Tür oder eines Festflügels ausgebildet sein, in den die Einheit eingebaut werden kann. Im eingebauten Zustand der Einheit beziehungsweise des Einsatzelements bildet das Kennzeichenschild der Einheit oder das Einsatzelement die nach außen hin begrenzende Oberfläche. Diese kann flächenbündig ausgebildet sein. Durch die Ausgestaltung der Einheit als Einsatzelement lässt sich diese mit herkömmlichen Schaltprogrammen kombinieren und in Unterputzdosen, Aufputzgehäusen, Türprofile oder Schaltergehäusen installieren.

Vorteilhafterweise ist ein Blendrahmen und/oder eine Unterputzdose vorgesehen. Dabei kann der Blendrahmen ein Verkleidungsteil bilden, der die Einheit, insbesondere das Kennzeichnungsschild, passend einfasst. Mittels einer passenden Unterputzdose lässt sich die Einheit einfach an einer Gebäudewand montieren, und zwar durch Anordnen und Befestigen in einer Unterputzdose.

Die Leseeinrichtung weist ein Kommunikationselement zur Kommunikation mit den Identifikationsträgern auf. Das Kommunikationselement kann ein Funkelement, ein RFID-Element (Radio Frequency Identification), ein NFC-Element (Near Field Communication) und/oder ein Bluetooth-Element aufweisen. Somit lässt sich die Leseeinrichtung mit verschiedenen Identifikationsträgern, beispielsweise einer Ausweiskarte, eines Transponders oder eines Smartphones ansteuern.

Weiter erfindungsgemäß weist das Kommunikationselement zwei Antennenelemente auf. Bereits mit einem Antennenelement lässt sich eine hinreichende Lesereichweite erzielen, da die Antenne, wenn diese an die Größe des Kennzeichnungsschildes angepasst wird, über eine ausreichende Größe verfügt. Mit zwei Antennenelementen lassen sich verschiedene Übertragungsverfahren nutzen oder bei einem einheitlichen Übertragungsverfahren ggf. die Reichweite erhöhen. In jedem Fall ist die Fläche des Kennzeichnungsschildes hinreichend groß für ein Übertragungsverfahren oder eine Kombination aus den Übertragungsverfahren induktiv, optisch, akustisch und/oder kapazitiv.

Im Konkreten eine kapazitive Datenübertragung mit einem kapazitiv kommunizierenden Transponder eingesetzt werden. Als kapazitive Datenübertragung kann bspw. SE-Technik von BKS (BKS ist eine eingetragene Marke der BKS GmbH, 42549 Velbert, Deutschland) mit einem SE-Transponder eingesetzt werden. Bei der kapazitiven Datenübertragung, bspw. mittels der SE-Technik, werden die Informationen auf dem Transponder gespeichert. Der Transponder kann ausgelesen und die Daten kapazitiv an das Kennzeichnungsschild übertragen werden.

Im Konkreten kann das Kennzeichnungsschild mindestens Schaltergröße, beispielsweise Lichtschaltergröße, aufweisen. So kann das Kennzeichnungsschild eine Größe von mindestens 2.500 mm² (Quadratmillimeter), vorzugsweise von 2.500 mm² bis 5.000 mm², aufweisen. Somit ist bei Einhalten für Kennzeichnungsschilder relevanter Vorschriften (DIN EN 13637) eine Integration in herkömmliche Schalterprogramme mit 55 mm Kantenlänge oder 70 mm Kantenlänge ermöglicht.

Zur Beleuchtung kann das Kennzeichnungsschild eine beleuchtete Folie, eine oder mehrere LEDs, eine Flüssigkeitskristallanzeige (LCD) oder ein OLED-Display aufweisen. Mit LEDs lassen sich durch Farbwechsel und/oder optische Muster auf einfache Weise Systemzustände darstellen. Mit einer beleuchtenden Folie lässt sich mit einfachen konstruktiven Mitteln eine besonders flache Bauweise eines Kennzeichnungsschildes realisieren. Mit einer Flüssigkeitskristallanzeige können weitere Informationen an Passanten weitergegeben oder es kann größere Aufmerksamkeit erregt werden, beispielsweise durch Veränderung der Beleuchtungsintensität.

Im Konkreten kann die Steuereinrichtung einen Prozessor zur Datenverarbeitung und eine Speichereinheit aufweisen. Durch den Prozessor kann eine Datenverarbeitung erfolgen, so dass die Ansteuerung durch Identifikationsträger ausgewertet und Steuerbefehle an weitere Module, beispielsweise einen Fluchttüröffner, weitergegeben werden können. In der Speichereinheit können Daten betreffend einer Zugangsberechtigung gespeichert sein, beispielsweise Daten von Identifikationsträgern.

Für eine Türöffnung insbesondere im Notfall ist ein Nottaster zur Ansteuerung eines Fluchttüröffners vorgesehen. Durch die Betätigung des Nottasters lässt sich die Fluchttür entweder sofort oder - bei verzögerter Ansteuerung eines Fluchttüröffners - zeitverzögert öffnen.

Im Konkreten kann die Steuereinrichtung mindestens einen Relaisausgang und/oder eine Bus-Einheit zur Ansteuerung eines Fluchttüröffners aufweisen. Somit kann ein Steuersignal direkt an den Fluchttüröffner weitergegeben und die Fluchttür im Bedarfsfall geöffnet werden.

Zur Energieversorgung kann eine netzgebundene Energiequelle vorgesehen sein. Da die für Kennzeichnungsschilder geltenden Vorschriften eine Beleuchtung des Kennzeichnungsschildes in Schaltergröße fordern, ist eine netzgebundene Energiequelle zweckmäßig. Durch die von der netzgebundenen Energiequelle gelieferte Energie können auch weitere Komponenten der Fluchttürsteuerung mit Energie versorgt werden.

Alternativ oder zusätzlich kann auch ein netzunabhängiger Energiespeicher eingesetzt werden, beispielsweise ein Akku oder eine Batterie. Damit lassen sich Spannungsschwankungen ausgleichen und/oder eine Notstromversorgung realisieren.

Die Erfindung wird im Folgenden anhand der Figuren näher erläutert.

Es zeigen:
- Figur 1: eine schematische Darstellung eines Ausführungsbeispiels einer Fluchttürsteuerung in Einbaulage an einer Fluchttür und
- Figur 2: in einer vergrößerten schematischen Darstellung eine Vorderansicht sowie eine teilweise geschnittene Seitenansicht der Fluchttürsteuerung aus Figur 1.

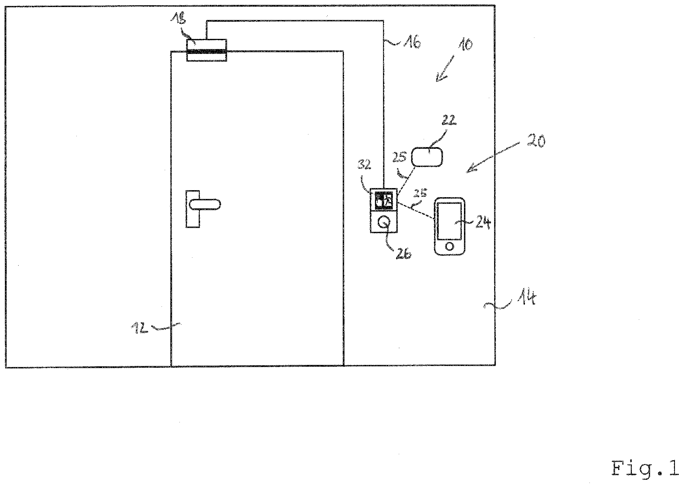

Figur 1 zeigt eine Fluchttürsteuerung, die insgesamt mit dem Bezugszeichen 10 bezeichnet ist.

Die Fluchttürsteuerung 10 ist im Bereich einer Fluchttür 12 an einer Wand 14 montiert. Die Fluchttürsteuerung 10 ist über eine Steuerleitung 16 mit einem Fluchttüröffner 18 verbunden.

Die Fluchttürsteuerung 10 ist mittels Identifikationsträgern 20 in Form einer Ausweiskarte 22 oder eines Smartphones 24 mittels einer drahtlosen Verbindung 25 ansteuerbar. Die drahtlose Verbindung 25 kann als induktive, optische, akustische oder kapazitive Verbindung ausgebildet sein. Bei berechtigtem Zutritt sendet die Fluchttürsteuerung 10 über die Steuerleitung 16 ein Steuersignal an den Fluchttüröffner 18, dessen Verriegelungselement (nicht dargestellt) sich von einer die Fluchttür 12 verriegelnden Position in eine die Fluchttür 12 freigebende Position verlagert. Des Weiteren ist ein Drucktaster 26 vorgesehen, bei dessen Betätigung die Fluchttür 12 vom Fluchttüröffner 18 ebenfalls freigegeben wird.

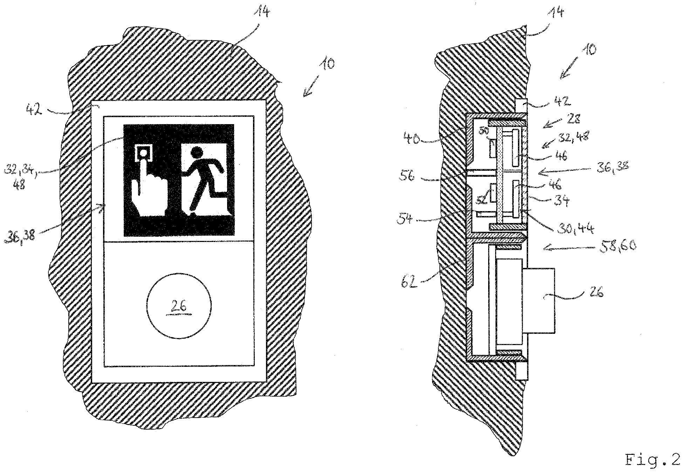

Figur 2 zeigt die Fluchttürsteuerung 10 in einer vergrößerten Darstellung. Die Fluchttürsteuerung 10 ist mit einer Steuereinrichtung 28 ausgestattet. Die Steuereinrichtung 28 weist eine Leseeinrichtung 30 zum drahtlosen Auslesen von Identifikationsträgern 20, 22, 24 auf. Außerdem weist die Fluchttürsteuerung 10 ein beleuchtetes Kennzeichnungsschild 32 auf, welches zur Notausgangkennzeichnung dient. Das Kennzeichnungsschild 32 weist zur Beleuchtung eine beleuchtete Folie 34 auf. Die Verwendung einer Flüssigkeitskristallanzeige (LCD) ist ebenfalls denkbar.

Die Leseeinrichtung 30 und das Kennzeichnungsschild 32 sind zu einer Einheit 36 zusammengefasst. Dabei ist die Einheit 36 als passendes Einsatzelement 38 für Schalterprogramme oder eine Unterputzdose 40 ausgebildet. Zur Aufnahme und Befestigung der Einheit 36 an einer Wand sind außerdem eine Unterputzdose 40 sowie einen Blendrahmen 42 vorgesehen. Somit lässt sich die Einheit 36 beziehungsweise das Einsatzelement 38 mit Schalterprogrammen kombinieren und wie ein Schaltereinsatz installieren.

Die Leseeinrichtung 30 weist ein Kommunikationselement 44 zur Kommunikation mit den Identifikationsträgern 20, 22, 24 auf. Das Kommunikationselement 44 kann als Funkelement, RFID-Element, NFC-Element und/oder ein Bluetooth-Element ausgebildet sein. Somit kann die Leseeinrichtung 30 mit verschiedenen Identifikationsträgern, beispielsweise in Form einer Ausweiskarte 22 oder mittels eines Smartphones 24, angesteuert werden.

Das Kommunikationselement 44 weist außerdem zwei Antennenelemente 46 auf. In das Kommunikationselement 44 sind auch die für die Antennenelemente 46 nötigen Beschaltungselemente integriert. Das Kennzeichnungsschild 32 weist ein Notausgang-Piktogramm 48 auf, mit dem Notausgänge kenntlich gemacht werden. Dabei weist das Kennzeichnungsschild 32 Schaltergröße, insbesondere Lichtschaltergröße, auf, also beispielsweise eine Größe von 2.500 mm² bis 5.000 mm².

Die Steuereinrichtung 28 weist einen Prozessor 50 zur Datenverarbeitung und eine Speichereinheit 52 auf, in der beispielsweise Zugangsberechtigungsdaten der Identifikationsträgern 20 gespeichert sein können.

Die Steuereinrichtung 28 weist außerdem einen Relaisausgang 54 zur Ansteuerung des Fluchttüröffners 18 auf. Anstelle des Relaisausgangs 54 ist auch die Verwendung einer Bus-Einheit zur Ankopplung an einen Datenbus denkbar.

Zur Energieversorgung der Fluchttürsteuerung 10 ist eine netzgebundene Energiequelle 56 vorgesehen. Die Energiequelle 56 versorgt die Steuereinrichtung 28 sowie das Kennzeichnungsschild 32 mit Energie.

Der Nottaster 26 ist als separate Einheit 58, und zwar als Einsatzelement 60 ausgebildet. Das Einsatzelement 60 kann in einer Unterputzdose 32 positioniert und darin installiert werden.

Wie voranstehend bereits erläutert, ist die Fluchttürsteuerung 10 äußerst kompakt ausgebildet, da die Leseeinrichtung 30 zum drahtlosen Auslesen von Identifikationsträgern 20, 22, 24 und das beleuchtete Kennzeichnungsschild 32 zu einer Einheit 36, und zwar zu einem Einsatzelement 38 für Schalterprogramme oder für eine Unterputzdose ausgebildet ist. Die Leseeinrichtung 30 bildet eine Freigabeeinrichtung zum autorisierten Öffnen der Fluchttür 12, so dass ein üblicherweise verwendeter Schlüsselschalter entfallen und die Fluchttürsteuerung 10 dadurch besonders kompakt ausgebildet werden kann. Durch Verzicht auf den Schlüsselschalter ist zumindest eine mechanische Manipulationsmöglichkeit zum unautorisierten Öffnen der Fluchttür 12 genommen.

## Patentansprüche

1. Fluchttürsteuerung (10) mit einer Steuereinrichtung (28), wobei die Steuereinrichtung (28) eine Leseeinrichtung (30) zum drahtlosen Auslesen von Identifikationsträgern (20) aufweist, und mit einem beleuchteten Kennzeichnungsschild (32), wobei die Leseeinrichtung (30) und das Kennzeichnungsschild (32) zu einer Einheit (36) zusammengefasst sind, wobei die Einheit (36) als passendes Einsatzelement (38) für Schalterprogramme, Aufputzgehäuse und/oder für eine Unterputzdose (40) ausgebildet ist, wobei ein Nottaster (26) zur Ansteuerung eines Fluchttüröffners (18) im Notfall vorgesehen ist und wobei die Leseeinrichtung (30) ein Kommunikationselement (44) zur Kommunikation mit Identifikationsträgern (20) aufweist, **dadurch gekennzeichnet, dass** der Nottaster (26) als separate Einheit (58) in Form eines Einsatzelements ausgebildet ist und dass das Kommunikationselement (44) zwei Antennenelemente (46) aufweist.

2. Fluchttürsteuerung (10) nach Anspruch 1, **dadurch gekennzeichnet, dass** ein Blendrahmen (42) und/oder eine Unterputzdose (40) vorgesehen ist/sind.

3. Fluchttürsteuerung (10) nach einem der vorhergehenden Ansprüche, **dadurch gekennzeichnet, dass** das Kommunikationselement (44) ein Funkelement, ein RFID-Element, ein NFC-Element und/oder ein Bluetooth-Element aufweist.

4. Fluchttürsteuerung (10) nach einem der vorhergehenden Ansprüche, **dadurch gekennzeichnet, dass** das Kennzeichnungsschild (32) mindestens Schaltergröße, insbesondere eine Größe von mindestens 2.500 mm² (Quadratmillimeter), vorzugsweise von 2.500 mm² (Quadratmillimeter) bis 5.000 mm² (Quadratmillimeter), aufweist.

5. Fluchttürsteuerung (10) nach einem der vorhergehenden Ansprüche, **dadurch gekennzeichnet, dass** das Kennzeichnungsschild (32) zur Beleuchtung eine beleuchtete Folie (34), eine oder mehrere LEDs, eine Flüssigkeitskristallanzeige (LCD) oder ein OLED-Display aufweist.

6. Fluchttürsteuerung (10) nach einem der vorhergehenden Ansprüche, **dadurch gekennzeichnet, dass** die Steuereinrichtung (28) einen Prozessor (50) zur Datenverarbeitung und eine Speichereinheit (52) aufweist.

7. Fluchttürsteuerung (10) nach einem der vorhergehenden Ansprüche, **dadurch gekennzeichnet, dass** die Steuereinrichtung (28) mindestens einen Relaisausgang (54) und/oder eine Bus-Einheit zur Ansteuerung eines Fluchttüröffners (18) aufweist.

8. Fluchttürsteuerung (10) nach einem der vorhergehenden Ansprüche, **dadurch gekennzeichnet, dass** eine netzgebundene Energiequelle (56) zur Energieversorgung vorgesehen ist.

## Claims

1. An escape door controller (10) having a control device (28), wherein the control device (28) has a reader device (30) for wireless readout of identification carriers (20), and having an illuminated identification panel (32), wherein the reader device (30) and the identification panel (32) are combined into one unit (36), wherein the unit (36) is embodied as a fitting insert element (38) for switch programs, surface-mounted housings and/or a flush-mounted box (40), wherein an emergency keypad (26) for triggering an escape door opener (18) in an emergency is provided, and wherein the reader device (30) has a communication element (44) for communication with identification carriers (20), **characterized in that** the emergency keypad (26) is embodied as a separate unit (58) in the form of an insert element; and that the communication element (44) has two antenna elements (46).

2. The escape door controller (10) of claim 1, **characterized in that** a surrounding frame (42) and/or a flush-mounted box (40) is provided.

3. The escape door controller (10) of one of the foregoing claims, **characterized in that** the communication element (44) has a radio element, an RFID element, an NFC element, and/or a Bluetooth element.

4. The escape door controller (10) of one of the foregoing claims, **characterized in that** the identification panel (32) is at least the size of a switch, in particular being at least 2,500 mm² (square millimeters) in size, preferably 2,500 mm² (square millimeters) to 5,000 mm² (square millimeters) in size.

5. The escape door controller (10) of one of the foregoing claims, **characterized in that** for illuminating a lighted film (34), the identification panel (32) has one or more LEDs, a liquid crystal display (LCD) or an OLED display.

6. The escape door controller (10) of one of the foregoing claims, **characterized in that** the control device (28) has a processor (50) for data processing and a memory unit (52).

7. The escape door controller (10) of one of the foregoing claims, **characterized in that** the control device (28) has at least one relay output (54) and/or a bus unit for triggering an escape door opener (18).

8. The escape door controller (10) of one of the foregoing claims, **characterized in that** an energy source (56) connected to the power grid is provided for supplying energy.

## Revendications

1. Commande de porte de secours (10) comprenant un dispositif de commande (28), dans laquelle ledit dispositif de commande (28) présente un dispositif de lecture (30) servant à la lecture sans fil de supports d'identification (20), ainsi qu'une plaque signalétique lumineuse (32), dans laquelle ledit dispositif de lecture (30) et ladite plaque signalétique (32) sont réunis pour former une unité (36), dans laquelle ladite unité (36) est réalisée en tant qu'élément insert (38) ajusté pour des programmes d'interrupteur, boîtiers sur crépi et/ou pour une boite encastrée (40), dans laquelle un bouton-poussoir de secours (26) destiné à commander un ouvre-porte de secours (18) en cas d'urgence est prévu et dans laquelle ledit dispositif de lecture (30) comprend un élément de communication (44) pour la communication avec des supports d'identification (20), **caractérisée par le fait que** ledit bouton-poussoir de secours (26) est réalisé comme unité séparée (58) sous forme d'un élément insert et que ledit élément de communication (44) présente deux éléments d'antenne (46).

2. Commande de porte de secours (10) selon la revendication 1, **caractérisée par le fait qu'**un cadre de revêtement (42) et/ou une boîte encastrée (40) est/sont prévu(e)(s).

3. Commande de porte de secours (10) selon l'une quelconque des revendications précédentes, **caractérisée par le fait que** ledit élément de communication (44) comprend un élément radio, un élément RFID, un élément NFC et/ou un élément Bluetooth.

4. Commande de porte de secours (10) selon l'une quelconque des revendications précédentes, **caractérisée par le fait que** ladite plaque signalétique (32) présente au moins une taille d'interrupteur, en particulier une taille d'au moins 2.500 mm² (millimètre carré), de préférence comprise entre 2.500 mm² (millimètre carré) et 5.000 mm² (millimètre carré).

5. Commande de porte de secours (10) selon l'une quelconque des revendications précédentes, **caractérisée par le fait que**, pour l'éclairage, la plaque signalétique (32) présente une feuille lumineuse (34), une ou plusieurs diode(s) électroluminescente(s), un dispositif d'affichage à cristaux liquides (LCD) ou un écran OLED.

6. Commande de porte de secours (10) selon l'une quelconque des revendications précédentes, **caractérisée par le fait que** le dispositif de commande (28) comprend un processeur (50) de traitement de données et une unité de stockage (52).

7. Commande de porte de secours (10) selon l'une quelconque des revendications précédentes, **caractérisée par le fait que** ledit dispositif de commande (28) comprend au moins une sortie de relais (54) et/ou une unité de bus pour commander un ouvre-porte de secours (18).

8. Commande de porte de secours (10) selon l'une quelconque des revendications précédentes, **caractérisée par le fait qu'**une source d'énergie (56) de réseau pour l'alimentation en énergie est prévue.
